# EUROPEAN PATENT APPLICATION

(11) **EP 4 451 114 A1**
(43) Date of publication of application: **23.10.2024**
(21) Application number: 24161498.1
(22) Date of filing: 05.03.2024
(51) Int. Cl.: G06F 8/76

(54) **METHOD AND SYSTEM OF CONSTRUCTING REFACTORING PATH FOR ON-PREMISES APPLICATION MIGRATION TO CLOUD**

(30) Priority: 28.03.2023 IN 202321022677
(71) Applicant: Tata Consultancy Services Limited, Maharashtra (IN)
(72) Inventor: MARDIKAR, NANDKISHOR JANARDAN, 400076 Mumbai, Maharashtra (IN); ROUTRAY, BISWAMOHAN, 400607 Thane West - Maharashtra (IN)
(74) Representative: Goddar, Heinz J.

(57) **Abstract**

This disclosure relates generally to method and system of constructing refactoring path for on-premises application migration to cloud. Migrating an on-premises application to a new cloud environment without altering the application code is time consuming and complex. The method disclosed discovers a set of attributes of on-premises application received from a user for cloud migration to create a target cloud environment. The on-premises application is parsed to the target cloud environment through a set of pre-constructed refactoring stages. Further, a migration analysis is performed through one or more impacts of the set of pre-constructed refactoring stages over a set of considerations. Each impact is analyzed to recommend the on-premises application that qualifies for at least one of a migration, a transformation and a rebuild. The on-premises application is categorically mapped to the target cloud environment based on one or more variations identified across each technology domain with corresponding sub-technology domain.

## Description

### CROSS-REFERENCE TO RELATED APPLICATIONS AND PRIORITY

The present application claims priority to Indian application no. 202321022677, filed on March 28, 2023.

### TECHNICAL FIELD

The disclosure herein generally relates to application migration, and, more particularly, to method and system of constructing refactoring path for on-premises application migration to cloud.

### BACKGROUND

With changing times, technology has also changed where, organizations are increasingly dependent on improved business performance with minimal cost of innovation. Large organizations usually discover that a portion of on-premises application(s) deliver great business benefits by migration to cloud. Cloud computing has been perceived by many enterprises as solution that boosts businesses growth and accelerates commercialization with reduced migration resources. This has led to rapid adoption of cloud technology by organizations of different sizes and sectors. Cloud computing has reconfigured how organizational systems are deployed, managed, and implemented. Transition from application-based products to cloud-based businessoriented services has been accelerated by cloud computing.

Application migration is the process of moving a software application from on-premises server(s) to a cloud provider's environment. Transferring databases, data, applications, and IT processes to the cloud is part of the cloud migration process. Some custom applications can be pushed to the cloud without modification, while others require some form of re-engineering and are rarely obsolete or need to be built from scratch. Refactoring is the process of running application on the cloud provider's infrastructure after completely redesigning the application to better fit the new cloud environment. This strategy requires changing current application, or at least changing a large part of code base to take advantage of Cloud environment more effectively.

Traditionally, applications were migrated to a new environment by completely rewriting application for the new environment, which was time consuming and did not provide much benefit to existing applications. Environment upgrades are getting faster, so by the time an application is migrated, the new environment has already been released and there is no enough time to manually upgrade the application. Ensuring that logic is not lost during conversion and ensuring that migrations are consistent between old and new environments are two other issues that arise when migrating an application to another environment. However, such current solutions have the limitation of providing comprehensive utilities, rules, frameworks, and best practices for comprehensive application redesign.

Due to complex parameters and effort required in migrating application environments along with regular updates, there exists a need for a method to build refactoring path for on-premises application migration that migrates an application from native environment to the cloud without or with little manual assistance while addressing variety of issues associated with the application, and its components.

### SUMMARY

Embodiments of the present disclosure present technological improvements as solutions to one or more of the above-mentioned technical problems recognized by the inventors in conventional systems. For example, in one embodiment, a system of constructing refactoring path for on-premise application migration to cloud is provided. The system includes discovering a set of attributes of on-premise application received from a user for cloud migration and creates a target cloud environment for the on-premise application, based on the set of attributes. The on-premise application to be migrated is parsed to the target cloud environment through a set of pre-constructed refactoring stages. Further, migration analysis of the on-premise application is performed through one or more impacts of the set of pre-constructed refactoring stages over a set of considerations. One or more impacts of the on-premise application are analyzed to recommend the on-premise application that qualifies for at least one of a migration, a transformation and a rebuild. Then, the on-premise application is categorically mapped for facilitating a successful migration to the target cloud environment, based on one or more variations identified across each technology domain(s), with corresponding subdomain(s) and constructing a service compatibility matrix of the migrated on-premises application in the target cloud environment.

In accordance with an embodiment of the present disclosure, the set of considerations for the on-premise application comprises one or more function points over each refactoring stage, total number of interface stages, platform configuration of the on-premise application, the on-premise application type, an architecture type of the on-premise application, database of the on-premise application, and technology stack maturity.

In accordance with an embodiment of the present disclosure, the set of pre-constructed refactoring stages comprises rearchitecting the on-premise application received from user based on set of attributes and redesigning the target cloud to facilitate successful on-premise application migration. The on-premise application to be migrated to the target cloud environment is transformed by recommending one or more application modernization activities. Further, code refactoring of the application to be migrated to the target cloud environment is performed, based on a set of predefined rules and a set of constraints.

In accordance with an embodiment of the present disclosure, one or more application modernization activities comprises to generate one or more modified features of the target cloud environment that overlaps with one or more existing attributes of the on-premises application platform and providing a feasible assistance to select specific feature from a set of pre-defined stacks. Then, a version affinity of the on-premises application is evaluated, when migrated to the target cloud environment and utilizing an affinity look-up table for fitment of the target cloud environment.

In accordance with an embodiment of the present disclosure, one or more impacts of the on-premise application are analyzed to upgrade usage of existing software platform technology version with progressive software platform technology version.

In accordance with an embodiment of the present disclosure, one or more impacts of each on-premise application may be categorized into at least one of a low, medium, and high severity.

In accordance with an embodiment of the present disclosure, one or more features of existing software platform complement one or more features of the target cloud environment.

In accordance with an embodiment of the present disclosure, the on-premise application migration is optimal, when one or more dependencies and one or more interfaces of technology domain synchronize with the target cloud environment.

In another aspect, a method of constructing refactoring path for on-premises application migration to cloud is provided. The method includes discovering a set of attributes of on-premise application received from a user for cloud migration and creates a target cloud environment for the on-premise application based on the set of attributes. The on-premise application to be migrated is parsed to the target cloud environment, through a set of pre-constructed refactoring stages. Further, a migration analysis of the on-premises application is performed through one or more impacts of the set of pre-constructed refactoring stages over a set of considerations. One or more impacts of the on-premise application are analyzed to recommend the on-premises application that qualifies for at least one of a migration, a transformation and a rebuild. Then, the on-premises application is categorically mapped for facilitating a successful migration to the target cloud environment, based on one or more variations identified across each technology domain(s) with corresponding sub- domain(s) and constructing a service compatibility matrix of the migrated on-premise application in the target cloud environment.

In accordance with an embodiment of the present disclosure, the set of considerations for the on-premise application comprises one or more function points. over each refactoring stage(s), total number of interface stages, a platform configuration of the on-premise application, the on-premise application type, an architecture type of the on-premise application, a database of the on-premise application, and a technology stack maturity.

In accordance with an embodiment of the present disclosure, the set of pre-constructed refactoring stages comprises rearchitecting the on-premise application received from user, based on set of attributes, and redesigning the target cloud environment to facilitate successful on-premise application migration. The on-premise application to be migrated to the target cloud environment is transformed by recommending one or more application modernization activities. Further, code refactoring of the application to be migrated to the target cloud environment is performed based on a set of predefined rules and a set of constraints.

In accordance with an embodiment of the present disclosure, one or more application modernization activities comprise generating one or more modified features of the target cloud environment, that overlaps with one or more existing attributes of the on-premise application platform and providing a feasible assistance to select specific feature from a set of pre-defined stacks. Then, a version affinity of the on-premise application is evaluated when migrated to the target cloud environment and utilizing an affinity look-up table for fitment of the target cloud environment.

In accordance with an embodiment of the present disclosure, one or more impacts of the on-premise application are analyzed to upgrade usage of existing software platform version with progressive software platform version.

In accordance with an embodiment of the present disclosure, one or more impacts of each on-premise application may be categorized into at least one of a low, medium, and high severity.

In accordance with an embodiment of the present disclosure, one or more features of existing software platform compliment one or more features of the target cloud environment.

In accordance with an embodiment of the present disclosure, the on-premise application migration is optimal, when one or more dependencies and one or more interfaces of technology domain(s) synchronize with the target cloud environment.

In yet another aspect, a non-transitory computer readable medium for constructing refactoring path for on-premises application migration to cloud is provided. The method includes, discovering a set of attributes of on-premise application received from a user for cloud migration and creates a target cloud environment for the on-premise application, based on the set of attributes. The on-premise application to be migrated is parsed to the target cloud environment, through a set of pre-constructed refactoring stages. Further, a migration analysis of the on-premise application is performed through one or more impacts of the set of pre-constructed refactoring stages over a set of considerations. One or more impacts of the on-premise application are analyzed to recommend the on-premise application is categorically mapped for facilitating a successful migration to the target cloud environment, based on one or more variations identified across each technology domain(s) with corresponding sub-domain(s) and constructing a service compatibility matrix of the migrated on-premise application in the target cloud environment.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and together with the description, serve to explain the disclosed principles:
FIG.1 illustrates an exemplary application migration system using FIG.1, in accordance with some embodiments of the present disclosure.
FIG.2 is a functional block diagram depicting an on-premise application refactoring path of migration to a target cloud environment using the system of FIG.1, in accordance with some embodiments of the present disclosure.
FIG.3 is a flow diagram of a method of migrating on-premises application to the target cloud environment using the system of FIG.1, in accordance with some embodiments of the present disclosure.
FIG.4 illustrates schematic diagram depicting application refactoring manager using the system of FIG.1, in accordance with some embodiments of the present disclosure.
FIG.5A illustrates one or more impacts of the on-premises application identified for migration using the system of FIG.1, in accordance with some embodiments of the present disclosure.
FIG.5B illustrates an example on-premises application ecosystem to be migrated to the target cloud environment using the system of FIG. 1, in accordance with some embodiments of the present disclosure.
FIG.5C illustrates an example target cloud environment using the system of FIG.1, in accordance with some embodiments of the present disclosure.
FIG.5D illustrates an example features of the on-premises application using the system of FIG.1, in accordance with some embodiments of the present disclosure.
FIG.6 illustrates a refactoring path consideration across all applicable stages using the system of FIG. 1, in accordance with some embodiments of the present disclosure.
FIG.7A illustrates on-premises application refactoring manager user login screen using the system of FIG. 1, in accordance with some embodiments of the present disclosure.
FIG.8A through FIG.8C illustrates on-premises application migration manager refactoring process screens using the system of FIG. 1, in accordance with some embodiments of the present disclosure.
FIG.9A through FIG.9C illustrates on-premises application technology manager refactoring process screens using the system of FIG. 1, in accordance with some embodiments of the present disclosure.
FIG. 10A through FIG. 10F illustrates on-premises application migration of an Enterprise Service Bus (ESB) platform-Mulesoft using the system of FIG. 1, in accordance with some embodiments of the present disclosure.

### DETAILED DESCRIPTION OF EMBODIMENTS

Exemplary embodiments are described with reference to the accompanying drawings. In the figures, left-most digit(s) of a reference number identifies the figure in which reference number appears first. Wherever convenient, the same reference numbers are used throughout the drawings to refer to the same or like parts. While examples and features of disclosed principles are described herein, modifications, adaptations, and other implementations are possible without departing from the scope of the disclosed embodiments.

In order to provide users with high-quality experience, they deserve in today's digital environment, moving existing on-premises application(s) to the cloud requires increased performance, scalability, reliability, and security. Organizations think about a number of important factors before tackling the foundation of application migration to the cloud. A process that facilitates coexistence between software platforms that reside in on-premises environments and software that lives in (public or private) clouds is the moving of on-premises application(s) and data to the cloud. In the on-premises scenario, scalability restrictions during migration are always there, however they are less a function of hardware limitations. For instance, a typical on-premises packaged application (or applications) may include modules for finance, human resources (HR), supply chain management, sales, marketing, and other functional areas. There are very limited set of tools, utilities, guidelines, frameworks, and best practices for comprehensive application refactoring. Therefore, the necessity in this area to create differentiating tools and utilities to automate application refactoring as much as possible. Today, most application refactoring work is done manually by experienced architects.

Because of cloud computing, the relationship between companies and information technology solutions is changing. Cloud service providers are constantly introducing new features, services and functions. Companies are anticipated to migrate from on-premises application(s) and deploy hybrid clouds, which increase the demand for integration roles and necessitate the development of specialist knowledge to provide integration mechanisms between cloud and on-premises application(s). Each on-premises application that the user selects must be transferred into a cloud environment of some kind, whether it be an on-premises private cloud, a public cloud infrastructure service, a public platform as a service (PaaS) or a software as a service (SaaS), or a hybrid of the two, such as on-premises public-private cloud. Cloud service providers continue to focus on the shortcomings of cloud paradigm, particularly in terms of performance and poor latencies.

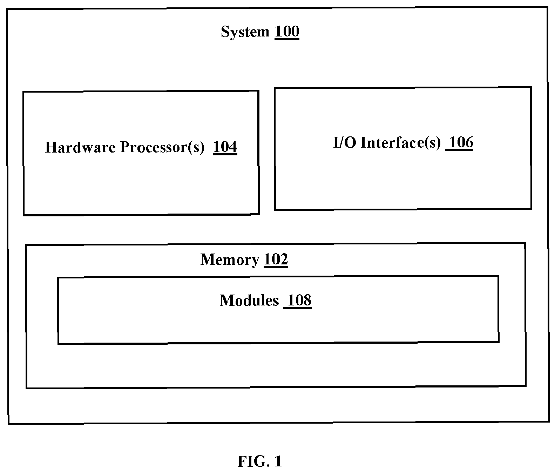

Embodiments herein provide a method and system of constructing refactoring path for on-premises application migration to cloud. The method of the present disclosure enables migrations of on-premises application to target cloud environment, based on user specified requirements. The on-premises application(s) may include for example an application comprising of various software platforms weaved together, with custom code based on respective user's business requirements. The application would consider complete ecosystem, by taking an enterprise view when the user decides to migrate to cloud. Each application is created, set up, and configured differently for on-premises deployment, than for cloud deployment. Refactoring path for on-premises application migration process offers thorough coverage of all architectures, designs, application types, technological changes, and code refactoring concerns throughout migration. The technique also reveals dependencies between the target platform and the current software platform. The disclosed system is further explained with the method as described in conjunction with FIG. 1 to FIG.10F below.

Referring now to the drawings, and more particularly to FIG. 1 through FIG.10F,where similar reference characters denote corresponding features consistently throughout the figures, preferred embodiments shown, and these embodiments are described in the context of following exemplary system and/or method.

FIG. 1 illustrates an exemplary application migration system using FIG. 1, in accordance with some embodiments of the present disclosure. In an embodiment, the batch processing system 100 includes processor (s) 104, communication interface (s), alternatively referred as or input/output (I/O) interface(s) 106, and one or more data storage devices or memory 102 operatively coupled to the processor (s) 104. The system 100, with the processor(s) is configured to execute functions of one or more functional blocks of the system 100.

Referring to the components of the system 100, in an embodiment, the processor (s) 104 can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the processor(s) 104 is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

The I/O interface(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices (nodes) of the system 100 to one another or to another server.

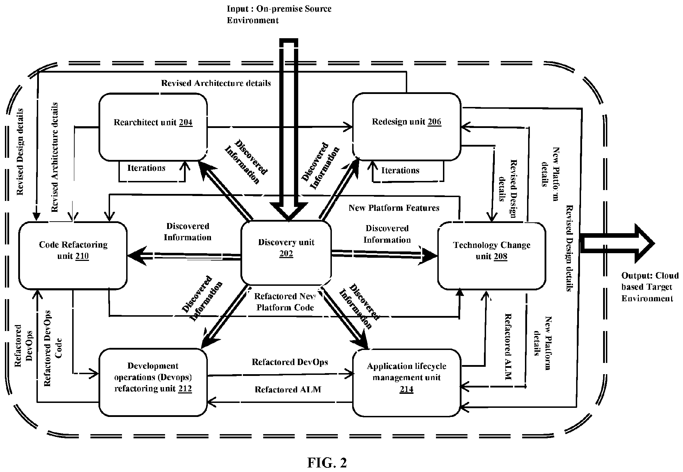

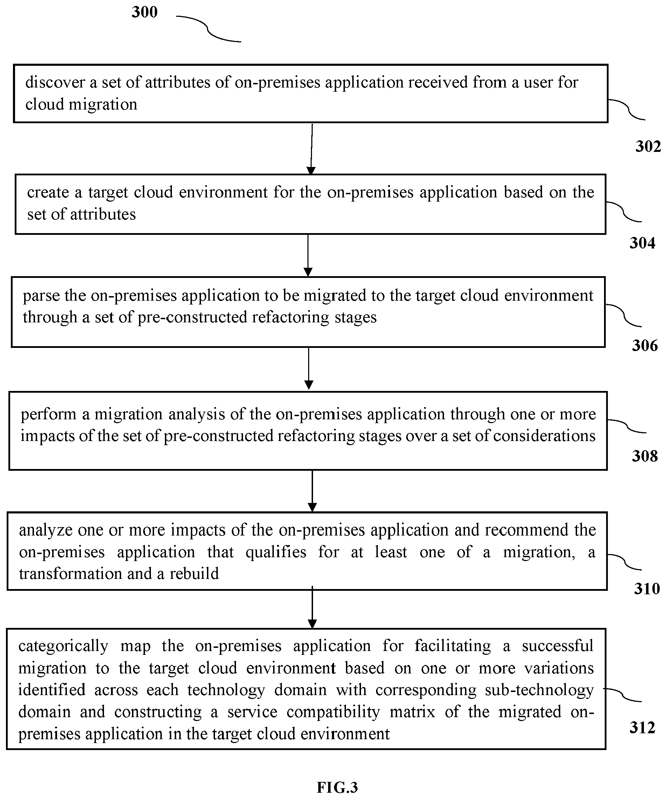

The memory 102 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. The memory 102 may comprise information pertaining to input(s)/output(s) of each step performed by the processor(s) 104 of the system 100 and methods of the present disclosure. Functions of the components of system 100, for predicting batch processes, are explained in conjunction with FIG.2 and FIG.3 providing flow diagram, architectural overviews, and performance analysis of the system 100.

FIG.2 is a functional block diagram depicting an on-premises application refactoring path of migration to a target cloud environment using the system of FIG. 1, in accordance with some embodiments of the present disclosure. The system 100 includes a discovery unit 202, a rearchitect unit 204, a redesign unit 206, a technology change unit 208, a code refactoring unit 210 and a development operations refactoring unit 212, and an application lifecycle management unit 214.

The system 100 provides an on-premises application refactoring cloud migration approach and offers a methodical roadmap for achieving application refactoring for cloud migration, which successfully addresses the issues of cost, reliability, and enterprise architectural skills. The disclosed method provides a framework that connects various technical platforms to pre-existing applications for cloud deployment in an automated, integrated, and policies-based manner. Additionally, the system ensures that following the cloud transfer, both functional and non-functional features are enhanced or unaltered allowing even unskilled workforce to finish complex migration journey

The discovery unit 202 of the system 100 obtains a set of attributes of the on-premises application. The application discovery activity uses probes and one or more discovery agents on each of the servers within users on-premise. Further, it collects server mapping to each on-premises application. Here, the user initiates the application discovery process for the information from user, server name/IP address, location, privilege username, and password.

The discovery unit 202 of the system 100 identifies system properties using a set of rule bases. A component recognition template is chosen using the rule base as well. A set of attributes that should be identified for each application type make up the component detection template. It also includes pointers to the applications or objects that were used to get the set of attributes. The discovery unit provides numerous component detection templates for various application characteristics, including platforms, infrastructure, users, and data. It helps to collect the following information about entire on-premises application ecosystem application type, platform, current version, backend database, operating system. Further, application architecture, implementation design, application logic as modules, security products used.

Each application recognize a certain set of properties from the component recognition template. This includes a reference to the object or script that was used to obtain a list of attributes that included the user's inventory of applications that were available on-premises. Each application's server mappings are gathered. configuration elements, performance metrics, processes that are active, network connections, data characteristics, and a dependency diagram. The technology mapper tool's top-down mapping of the relationships between application and infrastructure components and their mappings are extremely accurate.

The rearchitect unit 204 of the system 100 creates the on-premises application to be migrated in the target cloud deployment environment. The initial stage of on-premises application restructuring is called rearchitect unit, and it lays the groundwork for the full refactoring path for cloud migration. The target cloud environment is visualized using source architecture of the on-premises application ecosystem, and determined architectural efforts are made to transition to the target design. Discovery and visualization of source architectures can be utilized in all environments, for on-premises setups considering entire application ecosystem, including application security and user access management.

The redesign unit 206 of system 100 provides high-level detailed arrangement within the components and the design pattern solves code impact information.

The technology change unit 208 of the system 100 provides application modernization activity required as part of a cloud migration initiative. This represents changing the use of existing technology platforms, or replacing existing technology platforms, or removing existing technology platforms entirely. All of this should be driven by realizing the cloud environment as a cloud target environment. The cloud target environment is designed based on the user inputs. Technology changes are required to further develop the on-premises application ecosystem. This enables transformation part of cloud migration for competitiveness and future viability. During this phase, technology change improves robustness during post-migration situations. For example, the technology platforms may include middleware integration, business analytics, Bigdata, nonrelational databases (NoSQL), messaging middleware and thereof.

The code refactoring unit 210 of the system 100 is configured to make many small changes without changing the external behavior of the code based on certain principles, certain rules, and the technology stack involved.

The development operations (DevOps) refactoring unit 212 of the system 100 is performed after refactoring, the implemented cloud-native DevOps process for readjustment. This is measured against previously achieved benchmarks during the refactoring process. There are nuances when it comes to implementing DevOps in the cloud environment as against the on-premise DevOps setup. DevOps toolset may be modified for the cloud environment to improve efficiency and effectiveness and are aligned with the provisions of the target Cloud service provider.

The application lifecycle management unit 214 of the system 100 performs refactoring activities. After completing the aforementioned core phases of the application refactoring process, the refactoring activities related to application lifecycle management are performed according to component interactions.

FIG.3 is a flow diagram of a method of migrating on-premises application to the target cloud environment using the system of FIG. 1, in accordance with some embodiments of the present disclosure. In an embodiment, the system 100 comprises one or more data storage devices or the memory 102 operatively coupled to the processor(s) 104 and is configured to store instructions for execution of steps of the method 300 by the processor(s) or one or more hardware processors 104. The steps of the method 300 of the present disclosure will now be explained with reference to the components or blocks of the system 100 as depicted in FIG. 1 through FIG.2 and the steps of flow diagram as depicted in FIG.3. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring now to the steps of the method 300, at step 302, the one or more hardware processors 104 discovers a set of attributes of on-premises application received from a user for cloud migration. Refactored application runs on the cloud provider's infrastructure. This means that applications must be completely redesigned to better adapt to the new cloud environment. This approach involves modifying existing applications, or at least large portions of the code base, to better take advantage of cloud-based functionality and the additional flexibility that comes with it.

Briefly summarized the system 100 constructed as described herein carries out a process or processes for migrating a complex on-premises application from an initial application configuration to a new, "migrated" application configuration. Initiating the application discovery process in the system extracts the user application server name or IP address, location, privilege username, password and thereof. For instance, a typical on-premises packaged application(s) may include sales and marketing, supply chain management, human resources (HR), finance, and other function areas. The on-premises application may include for example Mulesoft, Cognos, Oracle, RabbitMQ, Cassandra, and thereof or any combination of technology domains and software platform.

The discovery unit 202 of the system 100 collects the server(s) mapped to each on-premises application and the set of attributes comprising application configurations, performance parameters, running processes, network connections and data characteristics.

Here, the on-premises application inventory applies probes and detection agents to each server internet protocol (IP) received from the user and collects a list of applications and ecosystem information. Additionally, each on-premises application is mapped to the server based on server type, specifications, capacity details, and utilization details. This further identifies the platform(s) in use, version, deployment, configuration details, and thereof to identify the technology stack.

The disclosed method addresses the application refactoring path of cloud migration is not limited to deployment of on-premises application in public clouds, on-premises private clouds to public clouds, hybrid model coverage with a combination of public cloud, private cloud, and multi-cloud to a single public cloud.

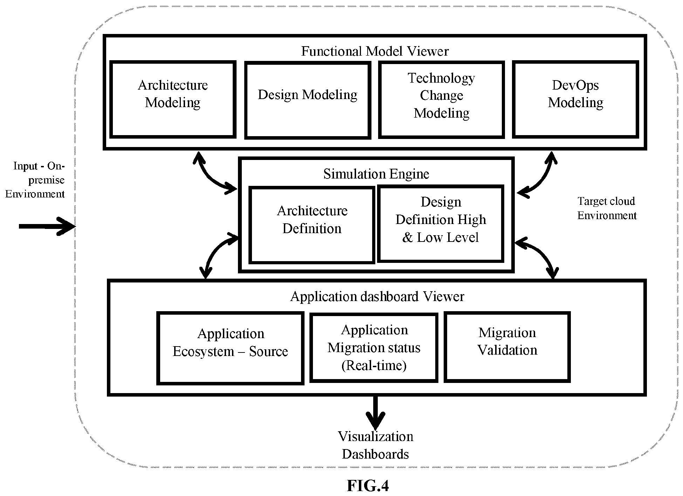

FIG.4 illustrates schematic diagram depicting application refactoring manager using the system of FIG. 1, in accordance with some embodiments of the. present disclosure. The application refactoring manager comprises a function model viewer, a simulation engine, and an application dashboard viewer. The application refactoring manager provides a single portal to view various aspects of migrations related to multiple applications in ecosystem. The application refactoring manager provides a consolidated dashboard view of the application environment, from deployment and configuration to integration and interfaces, providing clarity on the environment.

The functional model viewer allows to view a visual model of the application, including source and target cloud environments. Application design provides information about the high-level and low-level design of the application in the target environment. The dashboard's functional model viewer provides technical changes for version upgrades and replacement of existing technologies. The Devops model offers a cloud environment in the migrated setup.

The simulation engine allows users to view a simulation of the target cloud defining metadata and a simulation of each refactored architectural element. The simulation engine provides design definition (high-level and low-level) and design simulation of factors and principles to consider during the refactoring path.

The application dashboard viewer allows users to view all available refactoring policies and templates, including a comprehensive real-time application ecosystem dashboard view of user application migration status. The migration validation for application migration refactoring paths allow users to view status of regular or ad hoc audits of refactoring migration activities. This allow users to drill down into specific results and related control details.

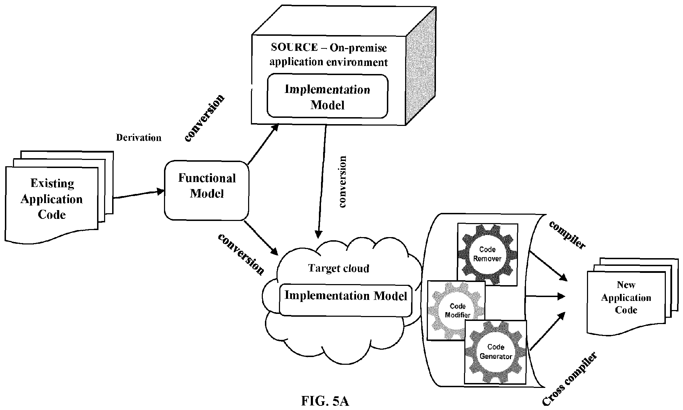

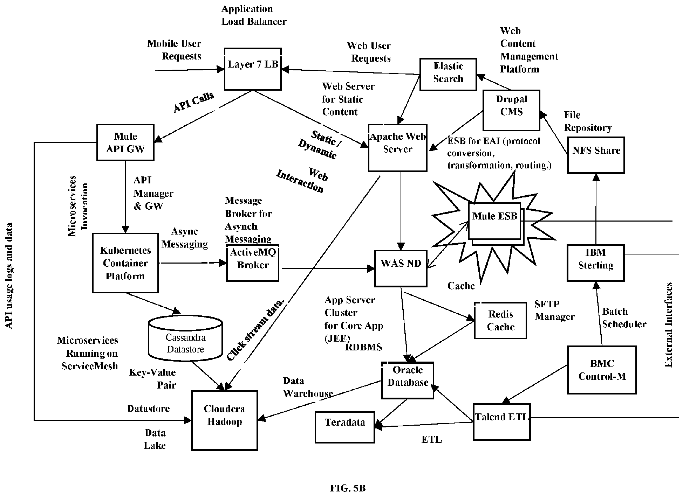

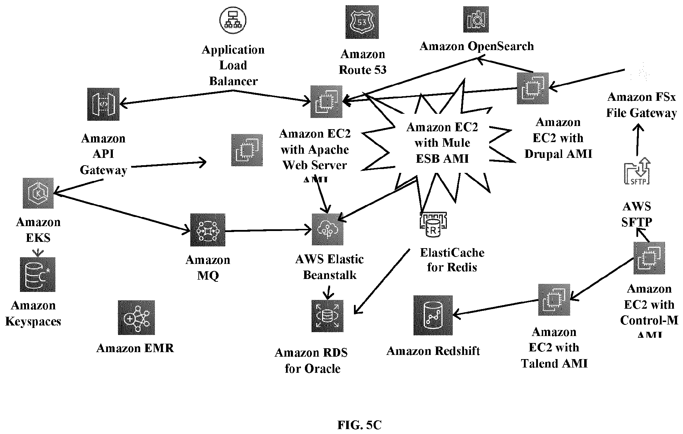

Considering a visualized example application ecosystem, which is an on-premises application (for example a Mule ESB) of a user to be referred as the source architecture (as depicted in FIG.5A and FIG.5B).

Referring now to the steps of the method 300, at step 304, the one or more hardware processors 104 create a target cloud environment for the on-premises application based on the set of attributes. For the above example (FIG.5A and FIG.5B), the method of the present disclosure creates the target cloud environment based on the set of attributes discovered from the discovery unit 202 of the system 100. When the user initiates the application rearchitect process in the system, and receives information from the user server(s), username, or IP address(es), location, privilege username, and privilege password. The disclosed method further creates the target cloud environment for the entire application ecosystem within user's on-premises, based on application architecture guidelines for the target cloud and architectural best practice repository. An architecture gap analysis is performed by identifying gaps between source and target cloud environments and identifying complementary and overlapping cloud-native capabilities available in the application. This also identifies the level of usage of cloud features, and selects the best feature from one or more features and rebuilds each application for self-healing.

Referring now to the steps of the method 300, at step 306, the one or more hardware processors 104 parse the on-premises application to be migrated to the target cloud environment through a set of pre-constructed refactoring stages. The set of pre-constructed refactoring stages comprises the steps of rearchitecting the on-premises application received from the user based on the set of attributes. Rearchitect process provides visual modeling of on-premises application for refactoring migration path, based on reference models for specific scenarios and provides ability to simulate functional and non-functional aspects.

The cloud is further redesigned to facilitate a successful on-premises application migration for selected applications to the target cloud environment. The cloud continues to transform for on-premises application success. Here, one or more design guidelines from the repository are applied, and specific patterns for each platform are extracted and applied. Provides platform portability accelerators that enable integration with cloud-native platforms that enhance existing platforms.

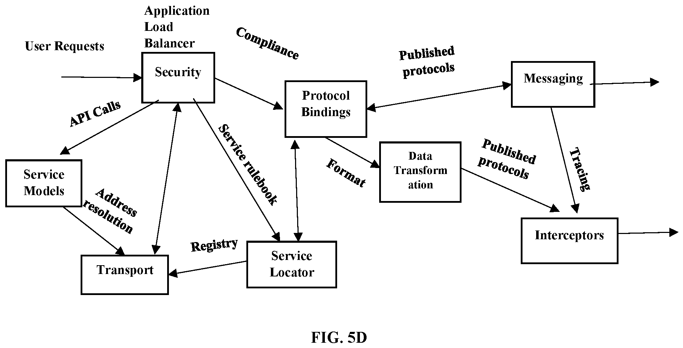

The on-premises application is transformed to be migrated to the target cloud environment by recommending one or more application modernization activities. The one or more application modernization activities comprises generating one or more modified features (referring now to FIG.5D) of the target cloud environment that overlaps with existing attributes of the on-premises application platform and provides feasible assistance to select specific feature from a set of pre-defined stacks. Further, a version affinity of the on-premises application is evaluated when migrated to the target cloud environment and an affinity look-up table is utilized for fitment of the target cloud environment.

Further, performs application code refactoring of the selected application to be migrated to the target cloud environment based on a set of predefined rules and a set of constraints. The set of predefined rules are based on for example Java, dot net technologies and the like.

In one embodiment, the method provides comprehensive recommendations for architecture, design, code, configuration, and management. Architectural recommendations form the basis for refactoring activities. Design recommendations are based on predefined platform design patterns and use cases. Code refactoring recommendations are derived from a predefined rule base built for different technology stacks. Configuration recommendations for each platform consider on-premises deployments and cloud setups.

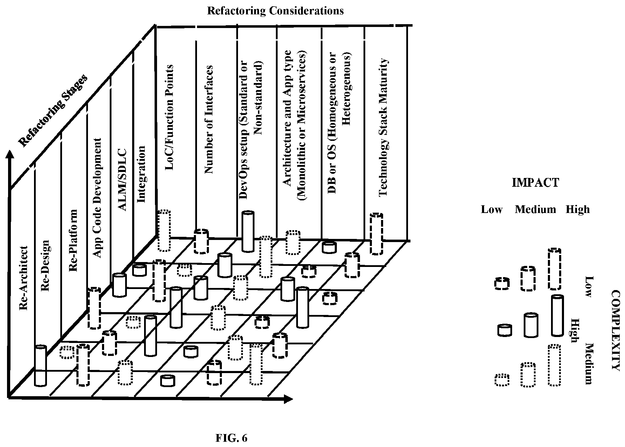

Referring now to the steps of the method 300, at step 308, the one or more hardware processors 104 perform a migration analysis of the on-premises application through one or more impacts of the set of pre-constructed refactoring stages over a set of considerations. The set of considerations (referring now FIG.6) for the on-premises application comprises a one or more function points over each refactoring stage, a total number of interface stages, a platform configuration of the on-premises application, the on-premises application type, an architecture type of the on-premises application, a database of the on-premises application, and a technology stack maturity.

Referring now to the steps of the method 300, at step 310, the one or more hardware processors 104 analyze one or more impacted areas of the on-premises application and recommend the on-premises application that qualifies for at least one of a migration, a transformation and a rebuild. The one or more impacts are analyzed based on predefined impact analysis templates for specific platforms and scenarios. Here, users can add new templates based on changing technology or usage patterns. Each impact analysis templates are based on platform characteristics, application characteristics, infrastructure characteristics, and data characteristics. The impact analysis template has ability to customize recommended templates based on user specific needs. Also, recommending appropriate configurations and code impacts to support cloud migration of application transformations.

In one embodiment, the one or more impacts of the on-premises application are analyzed to upgrade usage of existing software platform technology version with progressive software platform technology version.

Referring now to the steps of the method 300, at step 312, the one or more hardware processors 104 categorically map the on-premises application for facilitating a successful migration to the target cloud environment based on one or more variations identified across each technology domain(s) with corresponding sub-domain(s) and constructing a service compatibility matrix of the migrated on-premises application to the target cloud environment.

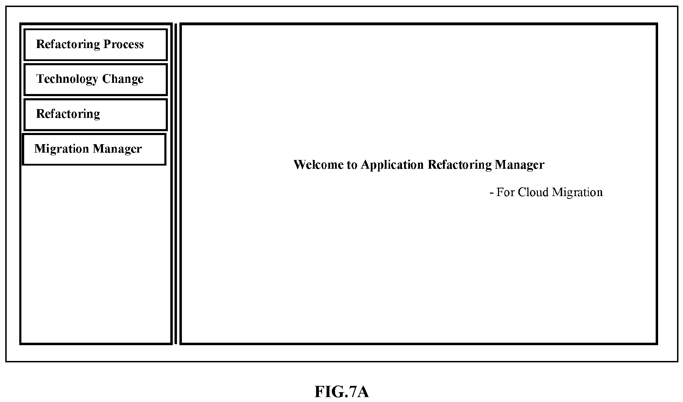

In one embodiment, referring now FIG.7A where the user login screen of on-premises application refactoring manager is listed, user performs refactoring process over the on-premises application.

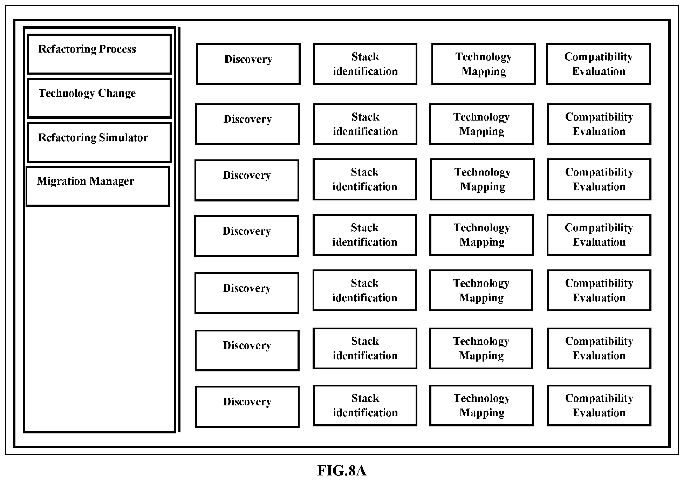

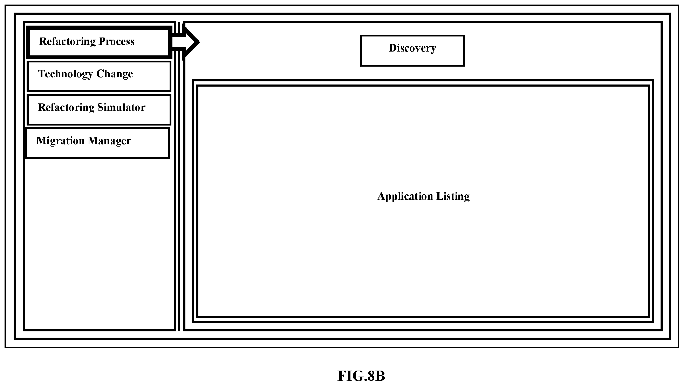

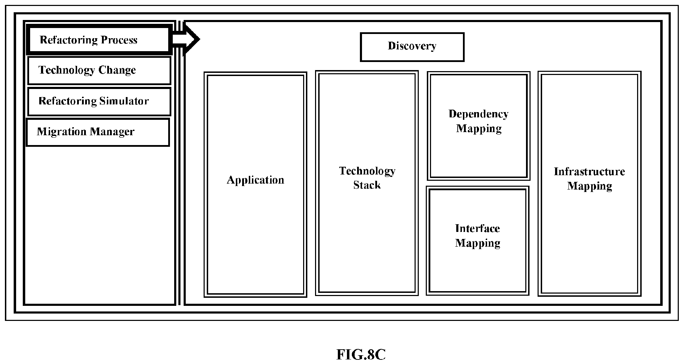

FIG.8A through FIG.8C illustrates refactoring process screens of application migration manager using the system of FIG. 1, in accordance with some embodiments of the present disclosure. The migration manager refactoring process is having discovery unit to extract the set of attributes of the user's on-premises application being set for migration.

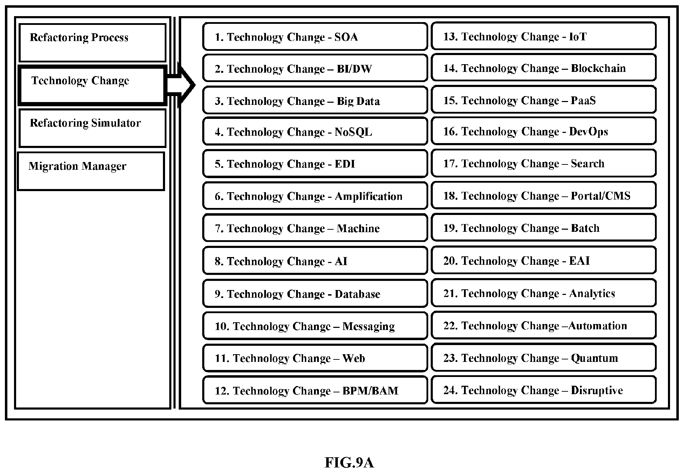

FIG.9A through FIG.9C illustrates refactoring process screens of on-premises application technology manager using the system of FIG. 1, in accordance with some embodiments of the present disclosure. FIG.9A depicts the technology domains option listing a set of pre-existing technologies, for which user selects the application migration technology. The set of pre-existing technology domains

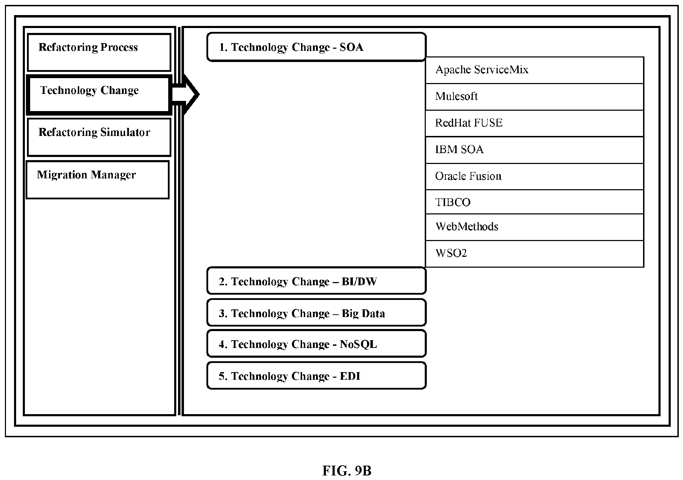

FIG.9B lists sub-domain for each technology domain(s). For example, service oriented architecture (SOA) comprises Apache service mix, enterprise service bus (ESB) Mulesoft, RedHat FUSE, IBM SOA, Oracle Fusion, TIBCO, Web methods, WSO2 and thereof.

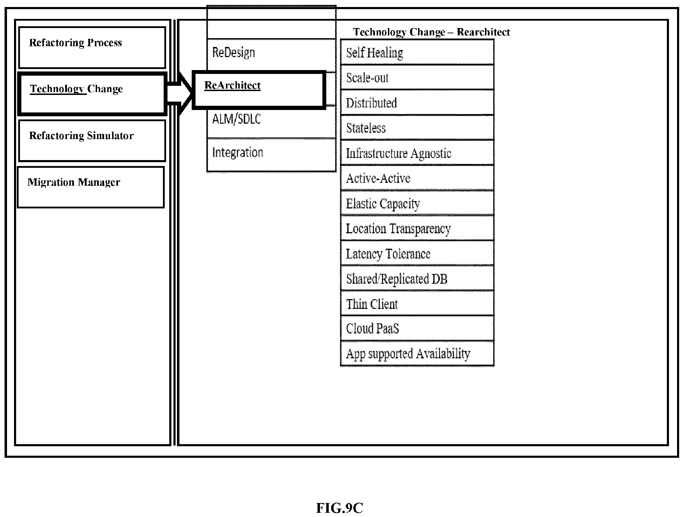

FIG.9C lists technology change to rearchitect the on-premises application based on for example self-healing, scale-out, distributed, and thereof.

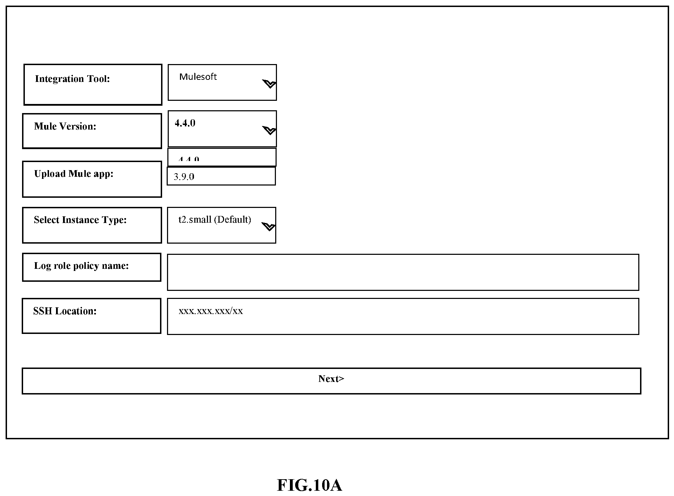

FIG. 10A through FIG. 10F illustrates on-premises application migration of an Enterprise Service Bus (ESB) platform-Mulesoft using FIG. 1, in accordance with some embodiments of the present disclosure. Referring now to FIG. 10 A depicting user login screen to migrate the on-premises application which displays screen to select integration platform (Mulesoft), among different platforms enabled in the refactoring manager. Further, once the user selects specific platform a specific version of that platform is listed. For example, the user selected version as 4.4.0.

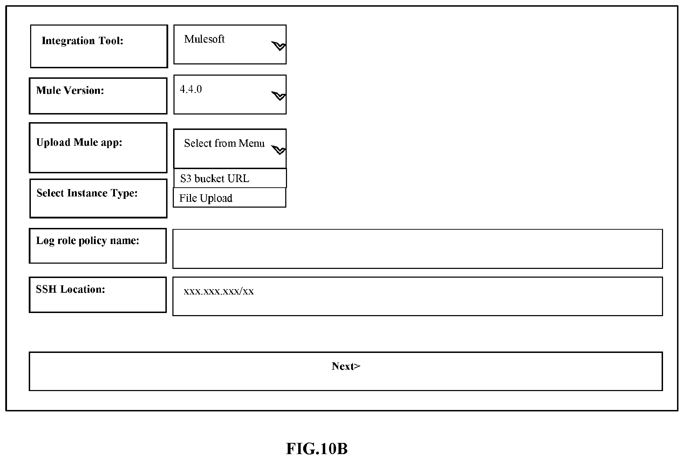

FIG. 10 B illustrates a next step of the on-premises application migration which is to upload the application code which is already used by the user in their environment. This is an important step in the entire migration and refactoring process. Here, user uploads from the local file system or leverage for example amazon web service (AWS) to provide the uniform resource locator (URL) where the application code has been placed.

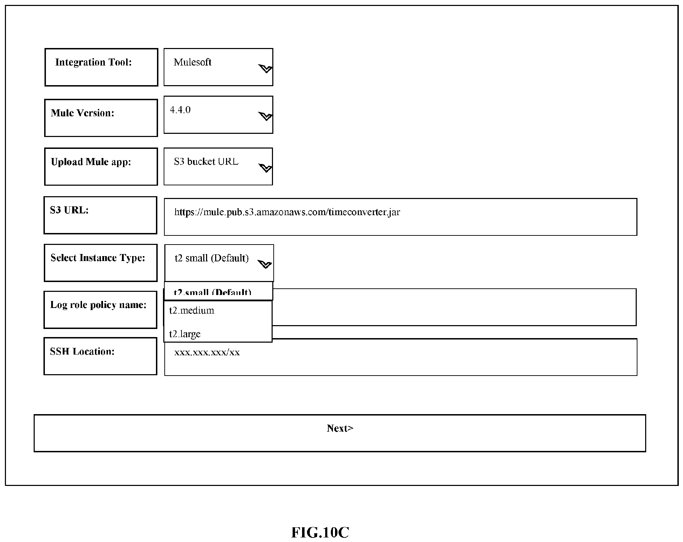

FIG.10C illustrates the migration refactoring manager screen can be used in different environments like development, testing, pre-production, production. Based on environment the infrastructure provision specific decision can be taken.

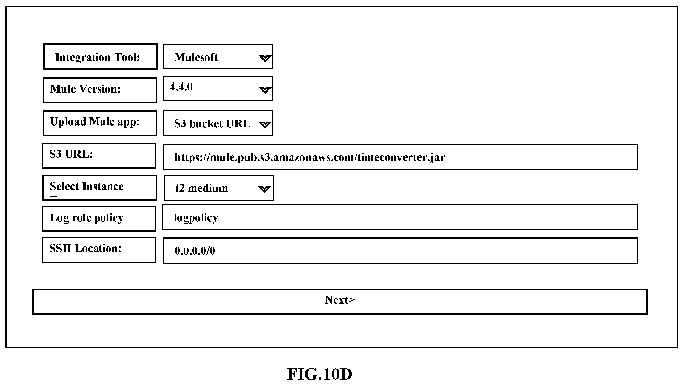

FIG.10D depicts the screen related to logs that need to be referred for monitoring after infrastructure provisioning and business application is deployed in the cloud environment.

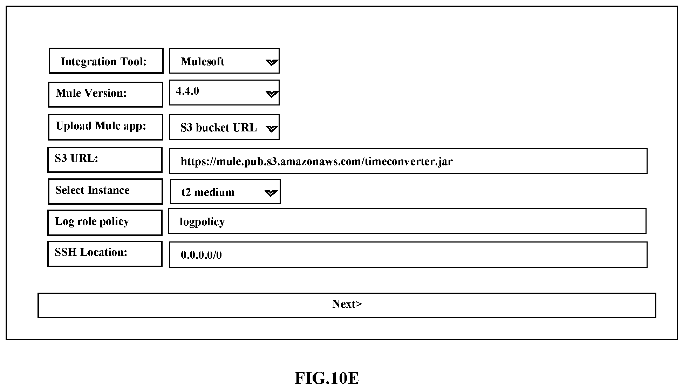

FIG.10E illustrates the login screen into the instance that is being provisioned. Once the user provide specific IP address then after infrastructure provisioning is completed by the user, with secure shell from specified IP address.

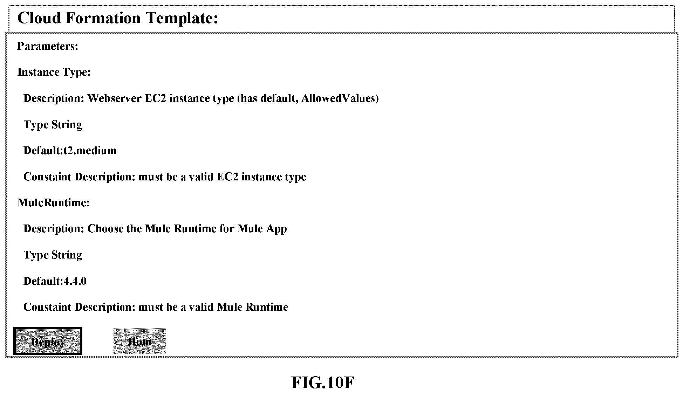

FIG.10F illustrates target cloud formation template for migrating on-premises application to cloud.

The written description describes the subject matter herein to enable any person skilled in the art of making and using the embodiments. Scope of the subject matter embodiments is defined by the claims and may include other modifications that occur to those skilled in the art. Such other modifications are intended to be within the scope of the claims, if they have similar elements that do not differ from the literal language of the claims or if they include equivalent elements with substantial differences from the literal language of the claims.

The embodiments of present disclosure herein addresses unresolved problem of application migration. The embodiment, thus provides method and system of constructing refactoring path for on-premises application migration to cloud. Moreover, the embodiments herein further provide on-premises application refactoring process. This method has potential to improve application availability by 15% to 25%, depending on policy configuration. This is achieved through a comprehensive refactoring framework, technology change management, code refactoring, seamless integration, and reduced downtime. This system potentially increases the dynamic composability of applications by 50% and is achieved by layering technology and data platforms during refactoring. This method has the ability to duplicate configuration or deployment policies, and policies are applied incrementally to application environments in the cloud. The system improves real-time monitoring and correlation of cloud migration refactoring paths across on-premises application ecosystems by 20%-30% through platform-specific validation connectors and rearchitect definition correlations. By applying consistent data-at-rest and data-in-transit protection (data encryption/data masking), the system can improve data transfer speeds across the application ecosystem. With endpoint input validation and job validation, this method can improve application reliability by 80-90%. Automated source infrastructure discovery, recommendation engines, the ability to leverage existing application platform investments, and non-functional impact simulations ensure proper restructuring and policy redesign to reduce infrastructure outages. Has a potential of 25% reduction in infrastructure capacity required for implementation.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an applicationspecific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include, but are not limited to, firmware, resident software, microcode, etc. The functions performed by various components described herein may be implemented in other components or combinations of other components. For the purposes of this description, a computerusable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method to construct refactoring path for migrating on-premises application to cloud, the method comprising:
discovering (302) via one or more hardware processors a set of attributes of on-premises application received from a user for cloud migration;
creating (304) via the one or more hardware processors a target cloud environment for the on-premises application based on the set of attributes;
parsing (306) via the one or more hardware processors the on-premises application to be migrated to the target cloud environment through a set of pre-constructed refactoring stages;
performing (308) via the one or more hardware processors a migration analysis of the on-premises application through one or more impacts of the set of pre-constructed refactoring stages over a set of considerations;
analyzing (310) via the one or more hardware processors one or more impacts of the on-premises application and recommend the on-premises application that qualifies for at least one of a migration, a transformation and a rebuild; and
categorically mapping (312) the on-premises application for facilitating a successful migration to the target cloud environment based on one or more variations identified across each technology domain with corresponding subtechnology domain and constructing a service compatibility matrix of the migrated on-premises application in the target cloud environment via the one or more hardware processors.

2. The processor implemented method as claimed in claim 1, wherein the set of considerations for the on-premises application comprises a one or more function points over each refactoring stage, a total number of interface stages, a platform configuration of the on-premises application, the on-premises application type, an architecture type of the on-premises application, a database of the on-premises application, and a technology stack maturity.

3. The processor implemented method as claimed in claim 1, wherein the set of pre-constructed refactoring stages comprises:
rearchitecting the on-premises application received from user based on the set of attributes and redesigning the target cloud to facilitate successful on-premises application migration;
transforming the on-premises application to be migrated to the target cloud environment by recommending one or more application modernization activities; and
performing application code refactoring of the application to be migrated to the target cloud environment based on a set of predefined rules and a set of constraints.

4. The processor implemented method as claimed in claim 3, wherein the one or more application modernization activities comprises:
generating one or more modified features of the target cloud environment that overlaps with one or more existing attributes of the on-premises application platform and providing a feasible assistance to select specific feature from a set of pre-defined stacks; and
evaluating a version affinity of the on-premises application when migrated to the target cloud environment and utilizing an affinity look-up table for fitment of the target cloud environment.

5. The processor implemented method as claimed in claim 1, wherein the one or more impacts of the on-premises application are analyzed to upgrade usage of existing software platform technology version with progressive software platform technology version, wherein the one or more impacts of each on-premises application may be categorized into at least one of a low, medium, and high severity.

6. The processor implemented method as claimed in claim 1, wherein the one or more features of existing software platform complement of the application in scope, with one or more features of the target cloud environment.

7. The processor implemented method as claimed in claim 1, wherein the on-premises application migration is optimal when one or more dependencies and one or more interfaces of technology domain(s) and sub-domain(s) synchronize with the target cloud environment.

8. A system (100) to construct refactoring path for migrating on-premises application to cloud, comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
discover a set of attributes of on-premises application received from a user for cloud migration;
create a target cloud environment for the on-premises application based on the set of attributes;
parse the on-premises application to be migrated to the target cloud environment through a set of pre-constructed refactoring stages;
perform a migration analysis of the on-premises application through one or more impacts of the set of pre-constructed refactoring stages over a set of considerations;
analyze one or more impacts of the on-premises application and recommend the on-premises application that qualifies for at least one of a migration, a transformation and a rebuild; and
categorically map the on-premises application for facilitating a successful migration to the target cloud environment based on one or more variations identified across each technology domain(s) with corresponding sub-domain(s) and constructing a service compatibility matrix of the migrated on-premises application to the target cloud environment.

9. The system of claim 8, wherein the set of considerations for the on-premises application comprises a one or more function points over each refactoring stage, a total number of interface stages, a platform configuration of the on-premises application, the on-premises application type, an architecture type of the on-premises application, a database of the on-premises application, and a technology stack maturity.

10. The system of claim 8, wherein the set of pre-constructed refactoring stages comprises:
rearchitecting the on-premises application received from user based on the set of attributes and redesigning the target cloud to facilitate successful on-premises application migration;
transforming the on-premises application to be migrated to the target cloud environment by recommending one or more application modernization activities; and
performing application code refactoring of the application to be migrated to the target cloud environment based on a set of predefined rules and a set of constraints.

11. The system of claim 10, wherein the one or more application modernization activities comprises:
generating one or more modified application features aligned with the target cloud environment that overlaps with one or more existing attributes of the on-premises application platform and providing a feasible assistance to select specific feature from a set of pre-defined stacks; and
evaluating a version affinity of the on-premises application when migrated to the target cloud environment and utilizing an affinity look-up table for fitment of the target cloud environment.

12. The system of claim 8, wherein the one or more impacts of the on-premises application are analyzed to upgrade usage of existing software platform technology version with progressive software platform technology version, wherein the one or more impacts of each on-premises application may be categorized into at least one of a low, medium, and high severity.

13. The system of claim 8, wherein the one or more features of existing software platform complement one or more features of the target cloud environment.

14. The system of claim 8, wherein the on-premises application migration is optimal when one or more dependencies and one or more interfaces of technology domain synchronize with the target cloud environment.

15. One or more non-transitory machine-readable information storage mediums comprising one or more instructions which when executed by one or more hardware processors cause:
discovering a set of attributes of on-premises application received from a user for cloud migration;
creating a target cloud environment for the on-premises application based on the set of attributes;
parsing the on-premises application to be migrated to the target cloud environment through a set of pre-constructed refactoring stages;
performing a migration analysis of the on-premises application through one or more impacts of the set of pre-constructed refactoring stages over a set of considerations;
analyzing one or more impacts of the on-premises application and recommend the on-premises application that qualifies for at least one of a migration, a transformation and a rebuild; and
categorically mapping the on-premises application for facilitating a successful migration to the target cloud environment based on one or more variations identified across each technology domain with corresponding subtechnology domain and constructing a service compatibility matrix of the migrated on-premises application in the target cloud environment.
